# EUROPEAN PATENT SPECIFICATION

(11) **EP 0 556 734 B1**
(45) Date of publication and mention of the grant of the patent: **15.07.1998**
(21) Application number: 93102202.4
(22) Date of filing: 12.02.1993
(51) Int. Cl.: G01L 3/04, G01L 3/10

(54) **Mechanical coupling for torque transducer**
Mechanische Kupplung für Drehmomentwandler
Accouplement mécanique pour transducteur de couple

(30) Priority: 18.02.1992 SE 9200477
(43) Date of publication of application: 25.08.1993
(73) Proprietor: ASEA BROWN BOVERI AB, 721 83 Västeras (SE)
(72) Inventor: Gustafsson,Pär, S-722 46,Västeras (SE); Jeremiasson,Jan, S-722 14 Västeras (SE); Ling,Hans, S-163 65 Spanga (SE)
(74) Representative: Boecker, Joachim, Dr.-Ing.

(56) References cited:
- DE-A- 1 573 427
- US-A- 3 329 012
- PATENT ABSTRACTS OF JAPAN vol. 11, no. 37 (P-543)(2484) 4 February 1987 & JP-A-61 207 940 (MITSUBISHI) 16 SEPTEMBER 1986.

## Description

The invention relates to a mechanical coupling for torque transducer according to the precharacterising part of claim 1.

In certain applications where the torque transmitted through a shaft is to be measured, it is required, in addition to the requirement that the torque transducer should be attached so as to be rigid in the direction of rotation, that it should also be connected so as to have low axial and flexural rigidity, which is due to the fact that the shaft has a not insignificant axial movement and bending. Unless special measures are taken, such movements will have a manifestly negative influence on the torque measurement.

Another very important requirement in this connection is that the application of a torque transducer should not be allowed to extend the shaft between the drive source and the load object to any mentionable degree.

An application which requires a torsionally rigid coupling, which still has low axial and flexural rigidity, to obtain a good torque measurement is the attachment of the torque transducer for measurement of the torque in the crankshaft of a car engine between the engine and the gearbox.

The above-mentioned demands for attachment of the torque transducer have previously made it more or less impossible to measure the torque delivered through the crankshaft in immediate proximity to the driving motor.

Torque measurement in shafts can be performed by means of transducers based on different measurement principles, for example with the aid of strain gauges or with magnetoelastic methods. The torque measurement always takes place within a certain measuring zone or a certain measuring range on the shaft. Concentrically around the measuring zone are different designs depending on the measurement principle which will be used.

The Patent Abstracts of Japan, vol. 11, no 37 (p-543)(2484) 04.02.87 & JP-A 1 208 940 (Mitsubishi) 16.09.86 describe a torque-measuring device with a torsion bar connected between a drive shaft and a driven shaft. In order to read the angular twist of the torsion bar when transmitting a torque each shaft is provided with a slit disc arranged adjacent to each other. The slit disc of the driven shaft is directly attached to the end of the driven shaft. In order to get the two slit discs in close vicinity to each other the slit disc of the drive shaft is carried by a tube which axially surrounds the torsion bar and is then fixed by a plate to the end of the drive shaft. The torsional angel is detected by light that is passed through the slits of the two adjacent slit discs. Both slit discs are unloaded, meaning that they do not transfer any forces.

The invention aims at providing a mechanical coupling for a torque transducer which coupling is torsionally rigid, but has low axial and flexural rigidity and which coupling does not cause any mentionable extension of the torque transmission system between the drive source and the load object.

To achieve this aim the invention suggests a mechanical coupling for torque transducers according to the introductory part of claim 1, which is characterized by the features of the characterizing part of claim 1.

Further developments of the invention are characterized by the features of the additional claims.

The invention comprises a specially shaped mechanical coupling between a drive source and a load object which allows attachment of a torque device and makes possible torque measurement under the conditions resulting from the above-mentioned requirements.

The coupling according to the invention can be used independently of which measurement principle will be used.

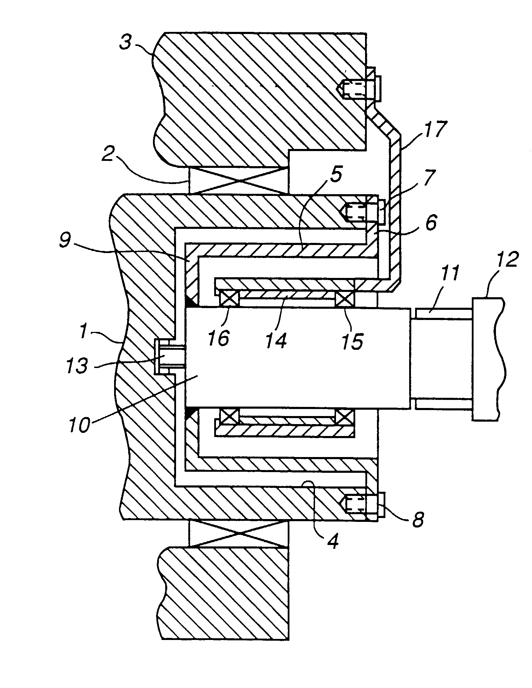

As an example of an application, the coupling according to the accompanying figure may be used for torque measurement in the crankshaft of a car engine between the engine and the gearbox or the clutch. The figure also shows how, in principle, a torque-sensing or signal-transmitting device can be fixed in relation to the measuring zone of a shaft.

The coupling according to the invention comprises a relatively thin-walled tube which at one end is covered with a plate and which at its other end is provided with an outwardly-facing weak flange. Via holes in the flange, the tube is bolted to the crankshaft. That part of the shaft which comprises the measuring zone, the transducer shaft, is fixed concentrically in the thin-walled tube to the plate.

A crankshaft 1 is journalled in an engine block 3 by means of a crankshaft bearing 2. The end of the crankshaft extending from the engine block is provided with a hole 4 inside which the coupling is situated. As already mentioned, the coupling comprises the thin-walled tube 5 with the weak flange 6 in which holes 7, 8 are provided for securing the coupling to the crankshaft by screws. The other end of the tube is provided with the plate 9. Concentrically in the cylindrical tube and to the plate, the transducer shaft 10 is fixed. According to the figure, the plate 9 may be provided with a concentric hole adapted to the centering and fixing of the transducer shaft. The other end of the transducer shaft is connected, by means of a joint 11, to an automatic gearbox or the clutch or flywheel 12 of the vehicle. The joint 11 may be designed in a number of different ways, for example by shaping it with a polygon cross-section, by splines, by welding, by shrinkage or with a keyway joint.

In one embodiment the mechanical coupling may be provided with a guide spindle 13 which concentrically extends from the transducer or plate 9 and which is journalled in some suitable way in the crankshaft.

The coupling may consist of an integrated design where the circular plate 9, the cylindrical tube 5 and the weak flange 6 are made in one piece, as shown in the figure, or the coupling may consist of separately manufactured parts which are welded or otherwise fixed to each other.

To obtain a good measure of the torque, the signal-transmitting device should in some way be concentrically coupled to the transducer shaft. In an embodiment according to the figure, this is done by mounting the signal-transmitting device 14 on the transducer shaft by means of transducer bearings 15 and 16. The signal-transmitting device, which is stationary in relation to the rotating shafts 1 and 10, may suitably by fixed to the engine block 3 by means of a clamp 17.

## Claims

1. Mechanical coupling for torque transducers between a drive source (1) and a load object (12), said torque transducer comprising a transducer shaft (10) and a signal-transmitting device (14), **characterized** in that the mechanical coupling comprises a thin-walled tube (5) which at its one end is covered with a plate (9) which is fixed to one end of the transducer shaft such that the transducer shaft (10) is arranged concentrically in said tube (5), the other end of the transducer shaft being adapted to be fixed to the load object (12), and which tube (5) on its other end is provided with an outwardly-facing flange (6) adapted to transmit the torque from said drive source (1), said flange (6) having low axial and flexural rigidity.

2. Mechanical coupling according to claim 1, **charaterized** in that holes (7, 8) are provided in said outwardly-facing thin flange (6) for securing the coupling to the drive source by screwing.

3. Mechanical coupling according to claim 1 or 2, **characterized** in that a guide spindle (13), adapted to be journalled in the drive source (1), is arranged concentrically at one end of the transducer shaft (10) or the said plate (9) attached to the transducer shaft.

4. Mechanical coupling according to any of the preceding claims, **characterized** in that the other end of the transducer shaft is connectable to the load object (12) by means of a joint (11).

5. Mechanical coupling according to any of the preceding claims, **characterized** in that the plate (9) is provided with a concentric hole adapted for the centering and fixing of the transducer shaft.

6. Mechanical coupling according to any of the preceding claims, **characterized** in that the coupling is arranged as an integral design with the plate (9), the tube (5) and the weak flange (6) made in one piece.

7. Mechanical coupling according to any of claims 1 to 5, **characterized** in that the coupling consists of a separately manufactured plate (9), a separately manufactured tube (5), and a separately manufactured flange (6) which are fixed to each other.

8. Mechanical-coupling according to any of the preceding claims, **characterized** by its application between the crankshaft of a car engine and the gearbox, the clutch or a flywheel of the car.

## Patentansprüche

1. Mechanische Kupplung für Drehmomentenübertrager zwischen einer Antriebsquelle (1) und einem Lastobjekt (12), wobei zu dem Drehmomentenübertrager eine Übertragerwelle (10) und eine signalübertragende Vorrichtung (14) gehören, **dadurch gekennzeichnet**, daß die mechanische Kupplung ein dünnwandiges Rohr (5) enthält, welches an seinem einen Ende mit einer Plappe (9) abgedeckt ist, die an einem Ende der Übertragerwelle derart befestigt ist, daß die Übertragerwelle (10) konzentrisch in dem genannten Rohr (5) angeordnet ist, während das andere Ende der Übertragerwelle zur Befestigung an dem Lastobjekt (12) vorgesehen ist, und welches Rohr (5) an seinem anderen Ende mit einem nach außen gerichteten Flansch (6) versehen ist, welcher das Drehmoment von der genannten Antriebsquelle (1) zu übertragen vermag, wobei der genannte Flansch (6) eine geringe axiale Festigkeit und eine geringe Biegefestigkeit hat.

2. Mechanische Kupplung nach Anspruch 1, **dadurch gekennzeichnet**, daß in dem nach außen gerichteten dünnen Flansch (6) Löcher (7, 8) zur Befestigung der Kupplung mittels Schrauben an der Antriebsquelle vorhanden sind.

3. Mechanische Kupplung nach Anspruch 1 oder 2, **dadurch gekennzeichnet,** daß ein Führungszapfen (13), der in der Antriebsquelle (1) lagerbar ist, konzentrisch an einem Ende der Übertragerwelle (10) oder an der genannten Platte (9), die an der Übertragerwelle befestigt ist, angebracht ist.

4. Mechanische Kupplung nach einem der vorhergehenden Ansprüche, **dadurch gekennzeichnet**, daß das andere Ende der Übertragerwelle mittels einer Verbindungsvorrichtung (11) an das Lastobjekt (12) anschließbar ist.

5. Mechanische Kupplung nach einem der vorhergehenden Ansprüche, **dadurch gekennzeichnet,** daß die Platte (9) mit einem konzentrischen Loch zur Zentrierung und Befestigung der Übertragerwelle versehen ist.

6. Mechanische Kupplung nach einem der vorhergehenden Ansprüche, **dadurch gekennzeichnet,** daß die Kupplung mit der Platte (9), dem Rohr (5) und dem schwachen Flansch (6) als integrale Einheit in einem Stück gefertigt ist.

7. Mechanische Kupplung nach einem der Ansprüche 1 bis 5, **dadurch gekennzeichnet**, daß die Kupplung aus einer getrennt gefertigten Platte (9), einem getrennt gefertigten Rohr (5) und einem getrennt gefertigten Flansch (6) besteht, die miteinander verbunden sind.

8. Mechanische Kupplung nach einem der vorhergehenden Ansprüche, **gekennzeichnet** durch ihre Verwendung zwischen der Kurbelwelle einer Kraftfahrzeugmaschine und dem Getriebe, der Kupplung oder einem Schwungrad des Kraftfahrzeuges.

## Revendications

1. Accouplement mécanique pour des transducteurs de couple, disposé entre une source (1) d'entraînement et un objet (12) formant la charge, le transducteur de couple comportant un arbre (10) transducteur et un dispositif (14) transmetteur de signal, caractérisé en ce que l'accouplement mécanique comporte un tube (5) à paroi mince qui à l'une des extrémités est couvert par une plaque (9) qui est fixée à une extrémité de l'arbre transducteur de sorte que l'arbre (10) transducteur est disposé concentriquement dans le tube (5), l'autre extrémité de l'arbre transducteur étant adaptée pour être fixée à l'objet (12) formant la charge et le tube (5) étant muni à son autre extrémité d'une bride (6) faisant face vers l'extérieur et apte à transmettre le couple de la source (1) d'entraînement, la bride (6) ayant une faible rigidité axiale et en flexion.

2. Accouplement mécanique suivant la revendication 1, caractérisé en ce que il est prévu, dans la bride (6) mince faisant face vers l'extérieur, des trous (7, 8) destinés à fixer l'accouplement à la source d'entraînement par vissage.

3. Accouplement mécanique suivant la revendication 1 ou 2, caractérisé en ce qu'une broche (13) de guidage, apte à être tourillonnée dans la source (1) d'entraînement, est prévue concentriquement à une extrémité de l'arbre (10) transducteur ou à la plaque (9) fixée à l'arbre transducteur.

4. Accouplement mécanique suivant l'une quelconque des revendications précédentes, caractérisé en ce que l'autre extrémité de l'arbre transducteur peut être reliée à l'objet (12) formant la charge au moyen d'un joint (11).

5. Accouplement mécanique suivant l'une quelconque des revendications précédentes, caractérisé en ce que la plaque (9) est munie d'un trou concentrique apte au centrage et à la fixation de l'arbre transducteur.

6. Accouplement mécanique suivant l'une quelconque des revendications précédentes, caractérisé en ce que l'accouplement est d'un seul tenant, la plaque (9), le tube (5) et la bride (6) faible étant d'une pièce.

7. Accouplement mécanique suivant l'une quelconque des revendications 1 à 5, caractérisé en ce que l'accouplement est constitué d'une plaque (9) fabriquée séparément, d'un tube (5) fabriqué séparément, et d'une bride (6) fabriquée séparément qui sont fixés les uns aux autres.

8. Accouplement mécanique suivant l'une quelconque des revendications précédentes, caractérisé par son application entre le vilebrequin d'un moteur automobile et la boîte de vitesse, l'embrayage ou un volant de l'automobile.
